# EUROPEAN PATENT SPECIFICATION

(11) **EP 3 548 340 B1**
(45) Date of publication and mention of the grant of the patent: **28.07.2021**
(21) Application number: 17876655.6
(22) Date of filing: 27.09.2017
(51) Int. Cl.: B60R 19/02, B60R 19/24

(54) **BREATHING STRUCTURE OF VEHICLE AND ITS ASSEMBLY**
ATMUNGSSTRUKTUR EINES FAHRZEUGS UND DEREN ANORDNUNG
STRUCTURE DE RESPIRATION DE VÉHICULE ET SON ENSEMBLE

(30) Priority: 30.11.2016 CN 201621302108 U
(43) Date of publication of application: 09.10.2019
(73) Proprietor: Compagnie Plastic Omnium, 69007 Lyon (FR); Yanfeng Plastic Omnium Automotive Exterior Systems Co., Ltd., Shanghai 201805 (CN)
(72) Inventor: GUI, Xiaogang, Shanghai 201805 (CN)
(74) Representative: LLR
(86) International application number: PCT/CN2017/103736
(87) International publication number: WO 2018/099175

(56) References cited:
- EP-A1- 2 017 123
- CN-A- 103 818 325
- CN-A- 105 922 954
- CN-U- 202 557 461
- CN-U- 203 005 212
- CN-U- 203 381 579
- CN-U- 206 217 820
- CN-Y- 201 100 284
- DE-A1-102007 033 313
- DE-U1-202009 002 796
- JP-A- 2007 331 744
- US-A1- 2006 249 987
- US-B1- 8 480 148

## Description

### Field of Invention

The present invention relates to vehicle exterior trim, and more particularly to a breathing structure of vehicle, as well as its assembly.

### Background

A vehicle is often provided with a bumper at its front or rear end. The bumper not only provides buffer and energy absorption to external collision so as to protect the vehicle body and passenger's safety, but also have a decorative function in pursuit of harmony with the vehicle overall design.

At present, with the increase of vehicle holdings, an even stricter requirement is set for gap and surface alignment of the vehicle appearance. Due to climate changes, harsh weather is often encountered. Under extreme environments, vehicle exterior trim pieces may undergo great deformation, which may affect appearance and even result in damage and falling of the exterior trim pieces, thereby becoming a great security risk. Thus, it is of vital significance to control the matching between exterior decorative pieces in extreme environments.

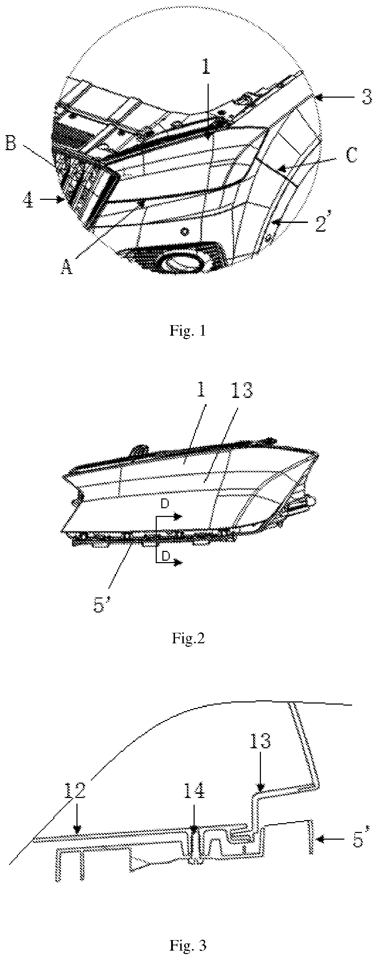

Figure 1 illustrates a schematic view of existing parts located in a vehicle headlight area, Figure 2 illustrates a schematic view of the vehicle headlight in Figure 1, and Figure 3 illustrates a cross-sectional structure taken along the line D-D in Figure 2. A headlight bracket 5', a light cover 12, a light housing 13 and a screw 14 connecting the headlight bracket 5' and the light cover 12 can be seen in Figure 3.

As shown in Figure 1 and with reference to Figures 2 and 3, the existing parts located in the vehicle headlight area comprise a vehicle headlight 1, a front vehicle bumper 2', a fender 3 and a grille 4. The front vehicle bumper 2' expands and contracts as ambient temperature changes. Since the front vehicle bumper 2' is fixed in the grille area B and the fender area C of the vehicle, only the headlight area A is left for the front vehicle bumper 2' to release dimensional variation. In the headlight area A, however, the front vehicle bumper 2' is uncontrolled in the front-rear direction and merely has a support in the upper-down direction. When the ambient temperature has a great change, the front vehicle bumper 2' will suffer a large deformation and bulge outwards, so that the surface alignment difference between the front vehicle bumper 2' and the vehicle headlight 1 in the front-rear direction can't be controlled within a reasonable tolerance range, which may affect the appearance and even become a security risk.

The document EP2017123. A1 discloses a front end assembly of a motor vehicle comprising a headlight of an optical unit and a bumper skin.

The document CN103818325 A discloses a connection structure between a grille trim and the grille as well as a front bumper.

The document DE 10 2007 033 313 A1, which represents the closest prior art, discloses a breathing structure of vehicle comprising a bracket configured to be fixedly connected to a first part of the vehicle and provided with at least one snap and at least one stopper; a flange configured to be fixedly connected to or integrally made with a second part of the vehicle and provided with at least one snap slot and at least one contraction part; wherein the bracket and the flange are configured to be engaged with each other; and wherein the snap and the snap slot are configured to be engaged with each other by a snap fit; and wherein the stopper and the contraction part are configured to be engaged with each other, once engaged a clearance is set between the stopper and the contraction part, and the contraction part can abut against the stopper when the second part suffers a deformation, so as to absorb and control the deformation of the second part.

### Summary

One of the objects of the present invention is to provide a breathing structure of vehicle, which can absorb and control the deformation of a vehicle body part (for example, a bumper) caused by temperature variation, so that the surface alignment difference between the vehicle body part and another vehicle body part (for example, a headlight) can be controlled within a reasonable tolerance range when the temperature changes.

To this end, the present invention provides a breathing structure of vehicle according to claim 1, which comprises:
- a bracket configured to be fixedly connected to a first part of the vehicle and provided with at least one snap and at least one stopper;
- a flange configured to be fixedly connected to or integrally made with a second part of the vehicle and provided with at least one snap slot and at least one contraction part; wherein the bracket and the flange are configured to be engaged with each other; and
wherein the snap and the snap slot are configured to be engaged with each other by a snap fit, once engaged a clearance is set between a snapping surface of the snap and a snapping surface of the snap slot, and the snapping surface of the snap can abut against the snapping surface of the snap slot when the second part suffers a deformation, so as to absorb and control the deformation of the second part; and
wherein the stopper and the contraction part are configured to be engaged with each other, once engaged a clearance is set between the stopper and the contraction part, and the contraction part can abut against the stopper when the second part suffers a deformation, so as to absorb and control the deformation of the second part.

In the breathing structure of vehicle of the present invention, the breathing structure is a structure capable of absorbing and controlling the deformation of a vehicle body part due to temperature variations. Said absorbing and controlling the deformation of a vehicle body part due to temperature variations means that: when the temperature of the vehicle body part varies, due to the effect of thermal expansion and contraction, the vehicle body part will produce expansion deformation as the temperature is increased and contraction deformation as the temperature is reduced; and absorbing the deformation means to enable the deformation, and controlling the deformation means to control the enabled deformation within a range.

In the breathing structure of vehicle of the present invention, when the snap slot moves outwards, the movement of the snap slot is stopped by a delayed stopping action under the effect of the delayed snapping action of the snap so as to absorb and control the outward movement of the snap slot, thereby absorbing and controlling the expansion deformation of the vehicle body part due to increased temperature. When the contraction part moves inwards, the contraction part deforms under the stopping action of the stopper so as to absorb and control the inward movement of the contraction part, thereby absorbing and controlling the contraction deformation of the vehicle body part due to reduced temperature. Thus, the bracket and the flange of the breathing structure of vehicle of the present invention can absorb and control the deformation of the vehicle body part due to temperature variations when they are respectively fixedly connected with another vehicle body part and the vehicle body part, so that when the temperature of the vehicle body part varies, the surface alignment difference between the vehicle body part (for example, a bumper) and another vehicle body part (for example, a headlight) can be ensured within a reasonable tolerance range, with no negative influence to the appearance, and meanwhile it prevents the vehicle body part from being damaged by over drawing and eliminates security risk.

According to a preferred embodiment of the present invention, the first part of the vehicle is a body of the vehicle and the second part of the vehicle is a bumper of the vehicle.

According to the present invention, the stopper comprises a first stopping surface and a second stopping surface, and the contraction part is a contraction groove and comprises a first abutting surface and a second abutting surface.

In the above solution, when the contraction groove moves inwards, the first stopping surface comes into contact with the first abutting surface, and the contraction groove deforms under the stopping action of the first stopping surface, and the contraction groove continues deforming until the second stopping surface comes into contact with the second abutting surface, and the contraction groove stops movement. The first abutting surface is usually an edge constituting the contraction groove, thus the deformation of the contraction groove is usually embodied as the deformation of the first abutting surface, which absorbs the inward movement of the contraction groove. In order to prevent the fracture of the first abutting surface due to an excessive deformation, the second abutting surface is set to be stopped when the first abutting surface deforms to some extent, so as to share the stopping force exerted on the first abutting surface. Then, the contraction groove stops movement to thereby control the range of the inward movement of the contraction groove. The second abutting surface may be a portion extending from another edge of the contraction groove, surpassing the altitude of the plane of the contraction groove.

Moreover, in the breathing structure of vehicle of the present invention, the at least one snap and the at least one stopper are arranged at intervals, and accordingly, the at least one snap slot and the at least one contraction part are arranged at intervals.

In the above solution, the interval arrangement enables the effect of absorbing and controlling the expansion of the vehicle body part due to increased temperature and the contraction thereof due to decreased temperature to be evenly distributed.

Furthermore, in the breathing structure of vehicle of the present invention, the bracket is a vehicle light bracket.

In the above solution, since the vehicle body part is usually fixed in vehicle engine hood and fender area, only light area is left for releasing dimensional variation. Thus, it is very common to use the vehicle light bracket as said bracket.

In addition, in the breathing structure of vehicle, the vehicle light is a vehicle headlight, the vehicle body part is a front vehicle bumper and the vehicle light bracket is a headlight bracket.

In the above solution, the deformation in the vehicle headlight area is rather serious, so it is very important to control the deformation of the front vehicle bumper in the vehicle headlight area.

Yet, in the breathing structure of vehicle, in a corresponding headlight area, the snaps and the stoppers are arranged at intervals, and accordingly the snap slots and the contraction parts are arranged at intervals.

In the above solution, the interval arrangement enables the effect of absorbing and controlling the expansion of the vehicle body part in the headlight area due to increased temperature and the contraction thereof due to decreased temperature to be evenly distributed.

Yet, in the breathing structure of vehicle, there are three snaps and four stoppers, and accordingly there are three snap slots and four contraction parts.

In the above solution, the allocation number presents a good result for absorbing and controlling the deformation.

Another object of the present invention is to provide a vehicle body part assembly capable of absorbing and controlling the deformation of the vehicle body part due to temperature variations, so as to ensure the surface alignment difference between the vehicle body parts (for instance, between a bumper and a headlight) to be within a reasonable tolerance range when the temperature of the vehicle body part varies.

To this end, the present invention provides a vehicle body part assembly comprising a breathing structure according to any of the above solutions, preferably the vehicle body part assembly is a bumper assembly.

The breathing structure of vehicle of the present invention has the following advantages:
(1) ensuring that the surface alignment difference between the vehicle body parts (for instance, between a bumper and a headlight) is within a reasonable tolerance range when the temperature of the vehicle body part varies, and meanwhile preventing the vehicle body part from being damaged by over drawing;
(2) satisfying customers' requirements for aesthetic appearance; and
(3) eliminating security risk caused by the vehicle body part deformation.

The vehicle body part or its assembly of the present invention also has the same advantages as it comprises the breathing structure/the flange of the breathing structure.

### Brief description of the figures

Figure 1 is a schematic view of existing parts in a vehicle headlight area;
Figure 2 is a schematic view of a headlight and a headlight bracket in Figure 1;
Figure 3 is a cross-sectional view taken along the line D-D in Figure 2;
Figure 4 is a top structural schematic view of a bumper according to an embodiment of the present invention;
Figure 5 is an exploded schematic view of the structure in Figure 4;
Figure 6 is a partial enlarged view of the slot in Figure 5;
Figure 7 is a cross-sectional view taken along the line A-A in Figure 4; and
Figure 8 is a cross-sectional view taken along the line B-B in Figure 4.

### Description of embodiments

Hereinafter a preferred embodiment of the present invention is described for a breathing structure of a bumper, as well as the bumper and its assembly, in details with reference to the drawings. However, it should be understood that the following description and illustrations do not constitute any unsuitable limitation to the technical solutions of the present invention, different embodiment or variant of such breathing structure, especially based on other vehicle body parts, can be foreseen by those skilled in the art.

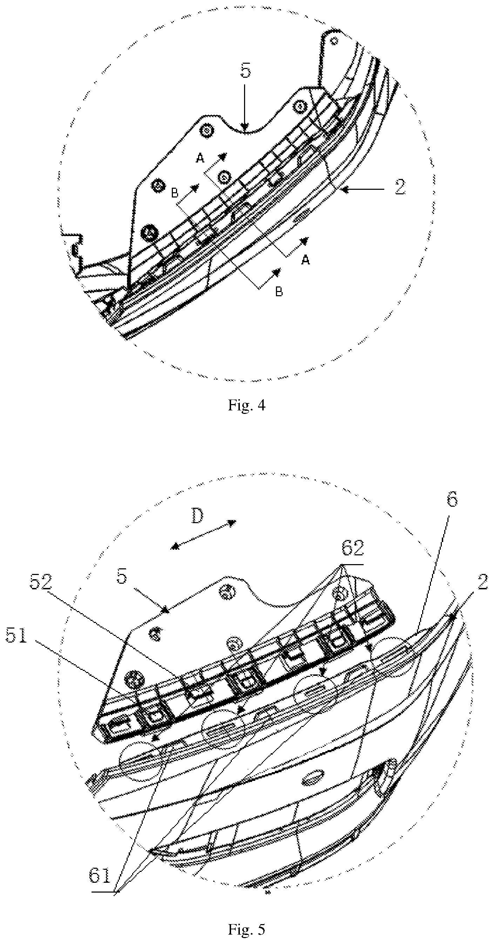

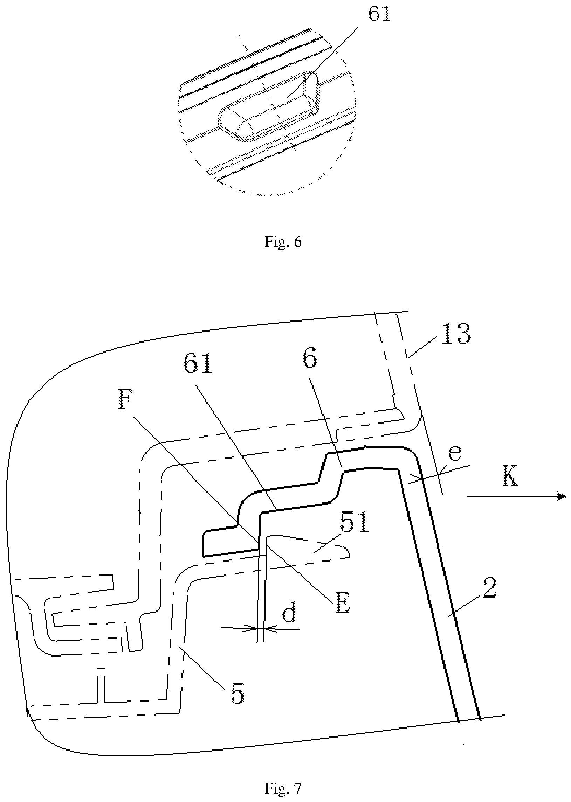

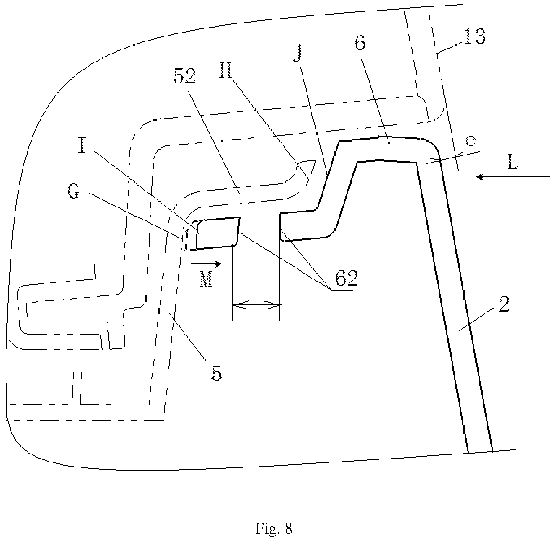

Since the breathing structure of bumper of the present embodiment is included in the bumper of the present embodiment, only the bumper of the present embodiment will be described in detail. Figure 4 is a top view illustrating the structure of the bumper of the present embodiment, Figure 5 illustrates an exploded view of the structure in Figure 4, Figure 6 illustrates a partial enlarged view of the slot in Figure 5, Figure 7 is a cross-sectional view taken along the line A-A in Figure 4, and Figure 8 is a cross-sectional view taken along the line B-B in Figure 4.

As shown in Figures 7 and 8 and with reference to Figures 4-6, the bumper of the present embodiment comprises a breathing structure in a vehicle headlight area, and the breathing structure in each vehicle headlight area comprises a headlight bracket 5 and a bumper flange 6, integrally formed with the main body of a front vehicle bumper 2. The headlight bracket 5 is fixedly connected with the vehicle body, and provided with three snaps 51 and four stoppers 52, arranged at intervals in its longitudinal direction D. The bumper flange 6 is provided with three snap slots 61 and four contraction grooves 62, arranged at intervals in its longitudinal direction. The headlight bracket 5 and the bumper flange 6 can be engaged each other with s snap fit, wherein the snap 51 and the snap slot 61 can be engaged each other with a snap fit, and once engaged a clearance d is set between a snapping surface E of the snap 51 and a snapping surface F of the snap slot 61; and wherein the stopper 52 and the contraction groove 62 can be engaged each other with a snap fit, and once engaged the stopper 52 and the contraction groove 62 are adjacently arranged. The stopper 52 has a first stopping surface G and a second stopping surface H, and accordingly, the body of the contraction groove 62 comprises a first abutting surface I and a second abutting surface J.

Further, with reference to Figures 7 and 8 and in relation with Figures 4-6, after the bumper of the present embodiment is installed in the vehicle:
When the ambient temperature rises, the front vehicle bumper 2 in the headlight area expands outwards (in the direction K) and drives the slot 61 to move outwards, and the clearance d absorbs the outward movement of the snap slot 61; when the moving distance reaches up to the width of the clearance d, the snapping surface E of the snap 51 and the snapping surface F of the snap slot 61 are snapped to each other and the snap slot 61 stops moving, and the snapping surface E and the snapping surface F jointly control the outward movement range of the snap slot 61. In summary, the snap 51 and the snap slot 61 absorb and control the thermal expansion deformation of the front vehicle bumper 2 due to the increased temperature, thereby ensuring that the surface alignment difference e between the front vehicle bumper 2 and the light housing 13 of the vehicle headlight is within a reasonable tolerance range when the temperature of the front vehicle bumper 2 rises.

When the ambient temperature is reduced, the front vehicle bumper 2 in the headlight area contracts inwards (in the direction L) and drives the contraction groove 62 to move inwards, and the first stopping surface G comes into contact with the first abutting surface I, and the first abutting surface I, as an edge of the contraction groove 62, deforms along the direction M towards the interior of the contraction groove 62 under the stopping effect of the first stopping surface G, which in turn leads to the deformation of the contraction groove 62 so as to absorb the inward movement of the contraction groove 62. Such movement continues until the second stopping surface H comes into contact with the second abutting surface J, and the contraction groove 62 stops moving, thus the first stopping surface G and the first abutting surface I, as well as the second stopping surface H and the second abutting surface J jointly control the inward movement range of the contraction groove 62. In summary, the stopper 52 and the contraction groove 62 absorb and control the contraction deformation of the front vehicle bumper 2 due to the decreased temperature, thereby ensuring that the surface alignment difference e between the front vehicle bumper 2 and the light housing 13 of the vehicle headlight is within a reasonable tolerance range when the temperature of the front vehicle bumper 2 is reduced.

As can be seen from the above description of the present embodiment, the bumper of the present embodiment can ensure the surface alignment difference e between the front vehicle bumper 2 and the light housing 13 of the vehicle headlight to be controlled within a reasonable tolerance range when the temperature of the front vehicle bumper 2 varies, with no negative influence to the appearance, and meanwhile it prevents the vehicle headlight from being damaged by over drawing and eliminates security risk.

## Claims

1. A breathing structure of vehicle, the breathing structure comprising:
- a bracket (5) configured to be fixedly connected to a first part of the vehicle and provided with at least one snap (51) and at least one stopper (52);
- a flange (6) configured to be fixedly connected to or integrally made with a second part (2) of the vehicle and provided with at least one snap slot (61) and at least one contraction part (62);
wherein the bracket (5) and the flange (6) are configured to be engaged with each other; and wherein the snap (51) and the snap slot (61) are configured to be engaged with each other by a snap fit, once engaged a clearance (d) is set between a snapping surface (E) of the snap (51) and a snapping surface (F) of the snap slot (61), and the snapping surface (E) of the snap (51) can abut against the snapping surface (F) of the snap slot (61) when the second part (2) suffers a deformation, so as to absorb and control the deformation of the second part (2); and
wherein the stopper (52) and the contraction part (62) are configured to be engaged with each other, once engaged a clearance is set between the stopper (52) and the contraction part (62), and the contraction part (62) can abut against the stopper (52) when the second part (2) suffers a deformation, so as to absorb and control the deformation of the second part (2),
wherein the stopper (52) comprises a first stopping surface (G) and a second stopping surface (H), and the contraction part is a contraction groove (62) and comprises a first abutting surface (I) and a second abutting surface (J),
wherein the first abutting surface (I) and the second abutting surface (J) abut respectively the first stopping surface (G) and the second stopping surface (H) by sequence when the second part (2) suffers a deformation.

2. The breathing structure of vehicle according to claim 1, wherein the first part of the vehicle is a body of the vehicle and the second part of the vehicle is a bumper of the vehicle.

3. The breathing structure of vehicle according to any one of the previous claims, wherein the at least one snap (51) and the at least one stopper (52) are arranged at intervals, and the at least one snap slot (61) and the at least one contraction part (62) are arranged at intervals.

4. The breathing structure of vehicle according to any one of the previous claims, wherein the bracket (5) is a bracket for vehicle light.

5. The breathing structure of vehicle according to the previous claim, wherein the vehicle light is a vehicle headlight, the second part is a front vehicle bumper and the bracket for vehicle light is a headlight bracket.

6. The breathing structure of vehicle according to the previous claim, wherein in a corresponding headlight area, the snap (51) and the stopper (52) are arranged at intervals, and the snap slot (61) and the contraction part (62) are arranged at intervals.

7. The breathing structure of vehicle according to the previous claim, wherein the number of the snaps (51) and the number of the stoppers (52) are respectively three and four, and correspondingly the number of the snap slots (61) and the number of the contraction parts (62) are respectively three and four.

8. A vehicle body part assembly, **characterized in that** it comprises the breathing structure of vehicle according to any one of claims 1 to 7, preferably the vehicle body part assembly is a bumper assembly.

## Patentansprüche

1. Atmungsstruktur eines Fahrzeugs, wobei die Atmungsstruktur umfasst:
- eine Halterung (5), die so konfiguriert ist, dass sie fest mit einem ersten Teil des Fahrzeugs verbunden ist und mit mindestens einem Schnapper (51) und/oder mindestens einem Stopper (52) versehen ist;
- einen Flansch (6), der so konfiguriert ist, dass er fest mit einem zweiten Teil (2) des Fahrzeugs verbunden oder einstückig mit diesem hergestellt ist, und der mit mindestens einem Schnappschlitz (61) und/oder mindestens einem Kontraktionsteil (62) versehen ist;
wobei die Halterung (5) und der Flansch (6) so konfiguriert sind, dass sie miteinander in Eingriff gebracht werden können; und
wobei der Schnapper (51) und der Schnapperschlitz (61) so konfiguriert sind, dass sie durch einen Schnapppassung miteinander in Eingriff gebracht werden, nach dem Einrasten wird ein Spiel (d) zwischen einer Schnappfläche (E) des Schnappers (51) und einem Schnappfläche (F) des Schnappschlitzes (61) eingestellt, und die Schnappfläche (E) des Schnappers (51) an der gegen die Schnappfläche (F) des Schnappschlitzes (61) stoßen kann, wenn das zweite Teil (2) eine Verformung erleidet, um so die Verformung des zweiten Teils (2) zu absorbieren und zu steuern; und
wobei der Stopper (52) und der Kontraktionsteil (62) so konfiguriert sind, dass sie miteinander in Eingriff stehen, nach dem Einrasten wird ein Spiel zwischen dem Stopper (52) und dem Kontraktionsteil (62) eingestellt, und die Kontraktionsteil (62) gegen den Stopper (52) stoßen kann, wenn das zweite Teil (2) eine Verformung erleidet, um so die Verformung des zweiten Teils (2) zu absorbieren und zu kontrollieren,
wobei der Stopper (52) eine erste Anschlagfläche (G) und eine zweite Anschlagfläche (H) aufweist, und der Kontraktionsteil eine Kontraktionsnut (62) ist und eine erste Anschlagfläche (I) und eine zweite Anschlagfläche (J) aufweist,
wobei die erste Anschlagfläche (I) und die zweite Anschlagfläche (J) nacheinander an der ersten Anschlagfläche (G) bzw. der zweiten Anschlagfläche (H) anliegen, wenn das zweite Teil (2) eine Verformung erleidet.

2. Atmungsstruktur eines Fahrzeugs nach Anspruch 1, wobei der erste Teil des Fahrzeugs eine Karosserie des Fahrzeugs ist und der zweite Teil des Fahrzeugs ein Stoßfänger des Fahrzeugs ist.

3. Atmungsstruktur eines Fahrzeugs nach einem der vorhergehenden Ansprüche, wobei der mindestens ein Schnapper (51) und der mindestens ein Stopper (52) in Abständen angeordnet sind, und der mindestens eine Schnapperschlitz (61) und das mindestens ein Kontraktionsteil (62) in Abständen angeordnet sind.

4. Atmungsstruktur eines Fahrzeugs nach einem der vorhergehenden Ansprüche, wobei die Halterung (5) eine Halterung für eine Fahrzeugleuchte ist.

5. Atmungsstruktur eines Fahrzeugs nach dem vorhergehenden Anspruch, wobei die Fahrzeugleuchte ein Fahrzeugscheinwerfer ist, das zweite Teil ein vorderer Fahrzeugstoßfänger ist und die Halterung für die Fahrzeugleuchte eine Scheinwerferhalterung ist.

6. Atmungsstruktur eines Fahrzeugs nach dem vorhergehenden Anspruch, wobei in einem entsprechenden Scheinwerferbereich der Schnapper (51) und der Stopper (52) in Abständen angeordnet sind und der Schnappschlitz (61) und der Kontraktionsteil (62) in Abständen angeordnet sind.

7. Atmungsstruktur eines Fahrzeugs nach dem vorhergehenden Anspruch, wobei die Anzahl der Schnapper (51) und die Anzahl der Stopper (52) jeweils drei und vier sind, und entsprechend die Anzahl der Schnapperschlitze (61) und die Anzahl der Kontraktionsteile (62) jeweils drei und vier sind.

8. Fahrzeugkarosserieteilbaugruppe, **dadurch gekennzeichnet, dass** sie die Atmungsstruktur des Fahrzeugs nach einem der Ansprüche 1 bis 7 umfasst, wobei die Fahrzeugkarosserieteilbaugruppe vorzugsweise eine Stoßfängerbaugruppe ist.

## Revendications

1. Structure respiratoire de véhicule, la structure respiratoire comprenant :
- un support (5) configuré pour être relié de manière fixe à une première partie du véhicule et pourvu d'au moins un encliquetage (51) et d'au moins une butée (52) ;
- un rebord (6) configurée pour être reliée de manière fixe à une deuxième partie (2) du véhicule ou pour en faire partie intégrante, et pourvue d'au moins une fente d'encliquetage (61) et d'au moins une partie de contraction (62) ;
dans laquelle le support (5) et le rebord (6) sont configurés pour être engagés l'un avec l'autre ; et
dans laquelle l'encliquetage (51) et la fente d'encliquetage (61) sont configurés pour être engagés l'un avec l'autre par un ajustement par encliquetage, une fois engagés, un jeu (d) est établi entre une surface d'encliquetage (E) de l'encliquetage (51) et une surface d'encliquetage (F) de la fente d'encliquetage (61), et la surface d'encliquetage (E) de l'encliquetage (51) peut venir en butée contre la surface d'encliquetage (F) de la fente d'encliquetage (61) lorsque la deuxième partie (2) subit une déformation, de manière à absorber et à contrôler la déformation de la deuxième partie (2) ; et
dans laquelle la butée (52) et la partie de contraction (62) sont configurées pour être engagées l'une avec l'autre, une fois engagées, un jeu est établi entre la butée (52) et la partie de contraction (62), et la partie de contraction (62) peut venir en butée contre la butée (52) lorsque la seconde partie (2) subit une déformation, de manière à absorber et à contrôler la déformation de la seconde partie (2),
dans laquelle la butée (52) comprend une première surface d'arrêt (G) et une seconde surface d'arrêt (H), et la partie de contraction est une rainure de contraction (62) et comprend une première surface de butée (I) et une seconde surface de butée (J),
dans laquelle la première surface de butée (I) et la seconde surface de butée (J) butent respectivement contre la première surface d'arrêt (G) et la seconde surface d'arrêt (H) par séquence lorsque la seconde partie (2) subit une déformation.

2. Structure respiratoire de véhicule selon la revendication 1, dans laquelle la première partie du véhicule est une carrosserie du véhicule et la seconde partie du véhicule est un pare-chocs du véhicule.

3. Structure respiratoire de véhicule selon l'une quelconque des revendications précédentes, dans laquelle le au moins un encliquetage (51) et le au moins un arrêt (52) sont disposés à intervalles, et le au moins une fente d'encliquetage (61) et le au moins une partie de contraction (62) sont disposés à intervalles.

4. Structure respiratoire de véhicule selon l'une quelconque des revendications précédentes, dans laquelle le support (5) est un support pour feu de véhicule.

5. Structure respiratoire de véhicule selon la revendication précédente, dans laquelle le feu de véhicule est un phare de véhicule, la seconde partie est un pare-chocs avant de véhicule et le support de feu de véhicule est un support de phare.

6. Structure respiratoire de véhicule selon la revendication précédente, dans laquelle dans une zone de phare correspondante, l'encliquetage (51) et la butée (52) sont disposés à intervalles, et la fente d'encliquetage (61) et la partie de contraction (62) sont disposées à intervalles.

7. Structure respiratoire de véhicule selon la revendication précédente, dans laquelle le nombre des encliquetages (51) et le nombre des butées (52) sont respectivement trois et quatre, et de manière correspondante, le nombre des fentes d'encliquetage (61) et le nombre des parties de contraction (62) sont respectivement trois et quatre.

8. Ensemble de pièce de carrosserie de véhicule, **caractérisé en ce qu'**il comprend la structure respiratoire de véhicule selon l'une quelconque des revendications 1 à 7, de préférence l'ensemble de pièce de carrosserie de véhicule est un ensemble de pare-chocs.
